# EUROPÄISCHE PATENTSCHRIFT

(11) **EP 3 941 388 B1**
(45) Veröffentlichungstag und Bekanntmachung des Hinweises auf die Patenterteilung: **19.07.2023**
(21) Anmeldenummer: 20709574.6
(22) Anmeldetag: 06.03.2020
(51) Int. Cl.: A61C 13/01, A61C 13/271

(54) **VERFAHREN ZUM HERSTELLEN EINES ZAHNERSATZES**
METHOD FOR PRODUCING A DENTAL PROSTHESIS
PROCÉDÉ POUR LA FABRICATION D'UNE PROTHÈSE DENTAIRE

(30) Priorität: 21.03.2019 AT 502482019
(43) Veröffentlichungstag der Anmeldung: 26.01.2022
(73) Patentinhaber: STEGER, Heinrich, 39031 Bruneck (IT)
(72) Erfinder: STEGER, Heinrich, 39031 Bruneck (IT)
(74) Vertreter: Torggler & Hofmann Patentanwälte - Innsbruck
(86) Internationale Anmeldenummer: PCT/EP2020/056048
(87) Internationale Veröffentlichungsnummer: WO 2020/187611

(56) Entgegenhaltungen:
- EP-A1- 2 066 258
- WO-A1-00/61071
- JP-A- 2006 045 094
- US-A- 6 077 075
- SWINYARD E A: "LOCAL ANESTHETICS", REMINGTON'S PHARMACEUTICAL SCIENCES, MACK PUBLISHING CO, US, 1. Januar 1990 (1990-01-01), Seite 1048, XP002912256,

## Beschreibung

Die Erfindung betrifft ein Verfahren zum Herstellen eines Zahnersatzes, wobei der Zahnersatz aus einem Zahnfleischkörper und aus am Zahnfleischkörper angeordneten und mit dem Zahnfleischkörper verbundenen Prothesenzähnen hergestellt wird und wobei die Oberfläche des Zahnersatzes einer Oberflächen-Behandlung unterzogen wird. Zudem betrifft die Erfindung einen Zahnersatz, insbesondere hergestellt in einem solchen Verfahren, mit einem Zahnfleischkörper und am Zahnfleischkörper angeordneten und mit dem Zahnfleischkörper verbundenen Prothesenzähnen. Zahnersatz wird eingesetzt, um die natürlichen menschlichen Zähne und das natürliche menschliche Zahnfleisch zumindest teilweise zu ersetzen. Derartiger Zahnersatz wird - im Gegensatz zu Implantaten - nicht im menschlichen Kieferknochen verankert, sondern wird üblicherweise durch meist gelförmige Klebemittel an einem zahnlosen Bereich des Kieferkamms lösbar befestigt. Derartige Dentalprothesen werden z. B. aus Kunststoff gefertigt. Der Zahnersatz kann in Form einer Dentalprothese oder (Kunststoff-)Krone ausgebildet sein. Ein Beispiel hierfür geht aus der AT 512 747 B1 hervor. Um ein ansprechendes optisches Ergebnis zu erreichen, werden die Dentalprothesen meist einer Oberflächen-Behandlung unterzogen. Zum Beispiel werden sie manuell nachbearbeitet, gereinigt und poliert. Das Polieren dient vor allem dazu, dass die Oberfläche glänzend und eben erscheint. Zudem können sich auf einer polierten Oberfläche weniger Verunreinigungen halten und weniger Bakterien einnisten. Bisher wird im Dentalbereich das Polieren durch manuelles Reiben oder Schleifen der Oberfläche durchgeführt, wodurch Unebenheiten, Furchen und Riefen ausgeglichen und eingeebnet werden. Bei diesem Reiben oder Schleifen kann es aber durchaus vorkommen, dass vor allem an weniger gut zugänglichen Stellen des Zahnersatzes dennoch ungewünschte Vertiefungen und Furchen verbleiben, was einerseits den optischen Eindruck beeinträchtigt und andererseits leichter zu Verunreinigungen führen kann.

WO0061071 A1 offenbart ein Lösemittel und Polymer enthaldendes Klebestoff, wobei das Lösemittel einen Chlorkohlenwasserstoff und ein Nitroderivat des Methans enthält.

EP 2 066 258 A1 offenbart ein Lösemittel, das einen Chlorkohlenwasserstoff enthält.

Die Aufgabe der vorliegenden Erfindung besteht daher darin, ein gegenüber dem Stand der Technik verbessertes Verfahren zu schaffen. Insbesondere soll die Oberfläche des Zahnersatzes möglichst glatt und glänzend werden. Zudem soll die Oberflächen-Behandlung möglichst einfach durchgeführt werden können.

Dies wird durch ein Verfahren mit den Merkmalen von Anspruch 1 gelöst. Demnach ist erfindungsgemäß vorgesehen, dass die Oberflächen-Behandlung des Zahnersatzes mit einem (flüssigen) Lösemittel erfolgt, wobei das Lösemittel, vorzugsweise zu 50 Gewichtsprozent bis 80 Gewichtsprozent, zumindest einen Chlorkohlenwasserstoff und, vorzugsweise zu 15 Gewichtsprozent bis 45 Gewichtsprozent, zumindest ein Nitroderivat des Methans enthält. Bei einem solchen Verfahren wird also kein materialabtragendes Verfahren (z. B. Reiben oder Schleifen) angewendet, sondern es wird ein chemisches Lösemittel aufgebracht. Dieses Lösemittel dient somit als Poliermitel. Einerseits verschließt dieses Lösemittel kleine Unebenheiten, Furchen und Vertiefungen, andererseits erzeugt die Zusammensetzung des Lösemittels eine glänzende Oberfläche. Darüber hinaus ist das Auftragen bzw. Aufbringen des Lösemittels relativ einfach und schnell durchführbar. Konkret ist das Lösemittel in der Lage, Polymerketten der Materialen des Zahnersatzes zu öffnen bzw. zu lösen und diese neu auszurichten.

Bevorzugte Ausführungsbeispiele der vorliegenden Erfindung sind unter anderem in den abhängigen Ansprüchen angegeben.

Der Zahnfleischkörper kann aus vorkonfektionierten Standardkomponenten hergestellt werden. Die Prothesenzähne können vorgefertigt oder vorkonfektioniert bezogen werden. Das heißt, es erfolgt keine Bearbeitung der Prothesenzähne durch den Zahntechniker. Bevorzugt ist allerdings vorgesehen, dass die Herstellung der Dentalprothese die Schritte Herstellen des Zahnfleischkörpers durch Bearbeiten eines ersten Rohlings, Herstellen der Prothesenzähne durch Bearbeiten zumindest eines zweiten Rohlings und Verbinden der Prothesenzähne mit dem Zahnfleischkörper zum Zahnersatz, insbesondere zur Dentalprothese, umfasst.

Die Bearbeitung der Prothesenzähne und/oder des Zahnfleischkörpers kann materialauftragend (z. B. durch 3D-Druck) erfolgen. Bevorzugt ist allerdings vorgesehen, dass die Bearbeitung materialabtragend durchgeführt wird. Besonders bevorzugt ist vorgesehen, dass die Bearbeitung der Prothesenzähne und/oder des Zahnfleischkörpers durch Fräsen oder Schleifen erfolgt. Dafür werden entsprechende Werkzeuge eingesetzte. Diese Bearbeitung kann automatisiert in einer CNC-Bearbeitungsmaschine erfolgen.

An sich ist es möglich, dass die Prothesenzähne und der Zahnfleischkörper einstückig bzw. einteilig ausgebildet sind. Das heißt, der Zahnersatz wird aus einem Rohling herausgearbeitet. Da aber der (rötliche bzw. fleischfarbene) Zahnfleischkörper und die (weißlichen bzw. zahnfarbenen) Prothesenzähne im Endprodukt unterschiedliche Farben aufweisen sollen, werden Rohlinge mit unterschiedlichen Ausgangsmaterialien bzw. mit unterschiedlichen optischen (z. B. die Farbe), thermischen, mechanischen oder chemischen Eigenschaften verwendet. Zudem kann das Ausgangsmaterial Farbstoffe enthalten. Die Farbstoffe können in das Material diffundiert werden.

Das Verbinden der Prothesenzähne mit dem Zahnfleischkörper kann an sich reibschlüssig oder formschlüssig erfolgen. Bevorzugt ist allerdings eine stoffschlüssige Verbindung, zum Beispiel durch Verkleben, vorzugsweise Diffusionskleben, mit einem geeigneten Klebemittel, vorgesehen.

Gemäß einem bevorzugten Ausführungsbeispiel ist vorgesehen, dass das Verbinden der Prothesenzähne mit dem Zahnfleischkörper durch das Lösemittel erfolgt. Somit hat das Lösemittel eine Doppelfunktion: Einerseits dient es als Poliermittel zum Polieren bzw. Glätten der Oberfläche, andererseits dient es als Klebemittel zum Verbinden des Zahnfleischkörpers mit den Prothesenzähnen.

Die Prothesenzähne und der Zahnfleischkörper weisen Kontaktbereiche auf, über welche sich die Prothesenzähne und der Zahnfleischkörper in zusammengesetzten Zustand kontaktieren. Das Verbinden erfolgt dann, indem das Lösemittel vor dem Zusammensetzen auf den Kontaktbereich des Zahnfleischkörpers und/oder der Prothesenzähne aufgetragen wird. Dann werden der Zahnfleischkörper und die Prothesenzähne zusammengesetzt bzw. zusammengedrückt. Die Polymerketten der beiden Kontaktbereiche (können auch als Fügeflächen bezeichnet werden) durchdringen sich und verschlaufen miteinander. Nach dem Entweichen des restlichen Lösemittels bilden sich physikalischen Wechselwirkungen zwischen den Polymerketten und es entsteht eine Kohäsionszone zwischen den beiden Fügeteilen (Zahnfleischerkörper und Prothesenzähne). Da bei diesem Verfahren keine Adhäsionszone entsteht und die Polymerketten der Oberflächen in das gegenüberliegende Fügeteil diffundieren, spricht von hier vom Diffusionskleben.

Bevorzugt ist vorgesehen, dass der erste Rohling für den Zahnfleischkörper und/oder der zweite Rohling für die Prothesenzähne aus einem, vorzugsweise thermoplastischen, Kunststoff besteht/bestehen. Konkrete Beispiele dafür sind PMMA, PC, ABS, PE, PP, PEEK, PA, POM, PVDF, PET, PBT und ähnliche. Die Kunststoffrohlinge können auch mehrschichtig oder mehrfarbig aufgebaut sein.

Chlorkohlenwasserstoffe bilden eine Stoffgruppe organischer Verbindungen und eine Untergruppe der Halogenkohlenwasserstoffe. Diese chemischen Stoffe besitzen ein Kohlenwasserstoff-Grundgerüst, bei dem eines oder mehrere Wasserstoff-Atome durch Chlor ersetzt sind. Gemäß einem bevorzugten Ausführungsbeispiel ist vorgesehen, dass der zumindest eine Chlorkohlenwasserstoff ausgewählt wird aus der Gruppe Chloroform, 1,2-Dichlorethan, Dichlormethan, Trichlorethylen, Acetylchlorid und Mischungen daraus.

Weiters ist bevorzugt vorgesehen, dass das zumindest eine Nitroderivat des Methans ausgewählt wird aus der Gruppe Nitromethan, Dinitromethan, Trinitromethan, Tetranitromethan und Mischungen daraus.

Gemäß einem weiteren bevorzugten Ausführungsbeispiel ist vorgesehen, dass das Lösemittel bis zu 10 Gewichtsprozent, vorzugsweise zwischen 0,1 Gewichtsprozent und 10 Gewichtsprozent, Ethanol oder dessen Derivate enthält. Ethanol ist ein aliphatischer, einwertiger Alkohol mit der Summenformel C₂H₆O. Bevorzugt ist vorgesehen, dass das Ethanol oder dessen Derivate ausgewählt ist aus der Gruppe Ethanol, Essigsäure, Acetaldehyd, Ethylacetat, Diethylether, Ameisensäureethylester und Mischungen daraus.

Bevorzugt ist auch vorgesehen, dass das Lösemittel bis zu 7,5 Gewichtsprozent, vorzugsweise zwischen 0,1 Gewichtsprozent und 7,5 Gewichtsprozent, Aromaten oder deren Alkohole oder Ether von alkoholischen Aromaten enthält. Aromatische Verbindungen, kurz auch Aromaten, sind eine Stoffklasse in der organischen Chemie.

Als Ether werden in der Chemie organische Verbindungen bezeichnet, die als funktionelle Gruppe eine Ethergruppe - ein Sauerstoffatom, das mit zwei Organylresten substituiert ist - besitzen. Bevorzugt enthält das Lösemittel Bestandteile ausgewählt aus der Gruppe Benzol, Benzylalkohol, Phenoxyethanol, Benzcatechin, Resorcin, Hydrochinon und Mischungen daraus.

Es ist bevorzugt vorgesehen, dass das Lösemittel bis zu 4 Gewichtsprozent, vorzugsweise zwischen 0,1 Gewichtsprozent und 4 Gewichtsprozent, Cycloalkane oder deren heterocyclische Verbindungen enthält. Die Cycloalkane sind eine Stoffgruppe von ringförmigen, gesättigten Kohlenwasserstoffen. Die Ringe können Seitenketten tragen. In der Systematik der organischen Chemie zählt man sie zu den alicyclischen Verbindungen. Bevorzugt werden die Cycloalkane oder deren Oxirane ausgewählt aus der Gruppe Cyclohexan, Cyclopentan, Oxan, Oxalan, Oxetan und Mischungen daraus.

Konkret ist für das Lösemittel vorgesehen, dass es (nur) die Bestandteile Dichlormethan zu 65 Gewichtsprozent bis 85 Gewichtsprozent, Nitromethan zu 15 Gewichtsprozent bis 25 Gewichtsprozent, Ethanol zu 2 Gewichtsprozent bis 4 Gewichtsprozent und Phenoxyethanol zu 1 Gewichtsprozent bis 3 Gewichtsprozent enthält.

Besonders bevorzugt enthält das Lösemittel konkret
- Dichlormethan zu 75 Gewichtsprozent,
- Nitromethan zu 20 Gewichtsprozent,
- Ethanol zu 3 Gewichtsprozent und
- Phenoxyethanol zu 2 Gewichtsprozent.

Die Oberflächen-Behandlung kann an sich auf beliebige Art und Weise erfolgen. Im Folgenden sind drei bevorzugte Varianten angeführt, die bei der vorliegenden Erfindung besonders gut geeignet sind.

Gemäß einer ersten Variante ist vorgesehen, dass die Oberflächen-Behandlung durch Bemalen des Zahnersatzes mit dem Lösemittel erfolgt. Konkret sind bei dieser Variante die Schritte Auftragen des Lösemittels mit einem Pinsel auf den Zahnersatz, Einwirken lassen des Lösemittels, vorzugsweise für etwa 30 Sekunden bis 3 Minuten, und Abspülen der Oberfläche des Zahnersatzes mit Wasser vorgesehen sein.

Gemäß einer zweiten Variante ist vorgesehen, dass die Oberflächen-Behandlung durch Eintauchen des Zahnersatzes in das Lösemittel erfolgt. Konkret sind bei dieser Variante die Schritte Eintauchen des Zahnersatzes, vorzugsweise für eine Sekunde bis 30 Sekunden, in das Lösemittel, Trocknen des Zahnersatzes, vorzugsweise mittels Druckluft, und Reinigen der Oberfläche der Zahnersatzes, vorzugsweise für etwa eine Minute und vorzugsweise mit Ultraschall, vorgesehen.

Gemäß einer dritten Variante ist vorgesehen, dass die Oberflächen-Behandlung durch Bedampfen des Zahnersatzes mit dem Lösemittel erfolgt. Konkret sind bei dieser Variante die Schritte Einbringen des Zahnersatzes in eine, vorzugsweise luftdichte, Bedampfungskammer, Schließen der Bedampfungskammer, gegebenenfalls Absenken des Drucks in der Bedampfungskammer, Einlassen des Lösemittels in die Bedampfungskammer, was zu einem Verdampfen zumindest eines Teils des Lösemittels führt, wodurch sich der Lösemittel-Dampf auf die Oberfläche des Zahnersatzes niederschlägt, Einwirken lassen des Lösemittels, vorzugsweise für wenigstens 30 Sekunden, Öffnen der Bedampfungskammer und Entnehmen des polierten Zahnersatzes aus der Bedampfungskammer vorgesehen. Wenn die Bedampfungskammer nicht luftdicht ist, kann das Lösemittel auch mit einem Verdampfer (thermisch oder mechanisch z. B. mittels Piezoelement) mit Überdruck in die Bedampfungskammer eingebracht werden. Eine allgemeine, gattungsfremde Schrift, welche das Aufbringen von Polierdampf auf 3D-Artikel zeigt, ist die WO 2018/156240 A1. Eine ähnliche, aber ebenfalls gattungsfremde Schrift ist die DE 10 2017 200 191 A1, welche das Glätten einer aus einem Kunststoff gebildeten Oberfläche eines Artikels für ein Kraftfahrzeug zeigt.

Als vierte Variante ist noch möglich, dass die Oberflächen-Behandlung durch Ansprayen des Zahnersatzes mit dem Lösemittel erfolgt.

Schutz wird auch begehrt für einen Zahnersatz, mit einem Zahnfleischkörper und am Zahnfleischkörper angeordneten und mit dem Zahnfleischkörper verbundenen Prothesenzähnen. Erfindungsgemäß ist vorgesehen, dass auf der Oberfläche des Zahnersatzes ein Lösemittel aufgebracht ist und dieses Lösemittel, vorzugsweise zu 50 Gewichtsprozent bis 80 Gewichtsprozent, ein Chlorkohlenwasserstoff und, vorzugsweise zu 15 Gewichtsprozent bis 45 Gewichtsprozent, ein Nitroderivat des Methans enthält. Bevorzugt ist vorgesehen, dass dieser Zahnersatz in einem erfindungsgemäßen Verfahren hergestellt ist.

Darüber hinaus wird Schutz begehrt für ein Lösemittel für einen Zahnersatz, wobei das Lösemittel als Bestandteile zumindest einen Chlorkohlenwasserstoff, vorzugsweise zu 50 Gewichtsprozent bis 80 Gewichtsprozent, und zumindest ein Nitroderivat des Methans, vorzugsweise zu 15 Gewichtsprozent bis 45 Gewichtsprozent, enthält. Bevorzugte Ausführungsbeispiele dieses Lösemittels sind bereits weiter oben beschrieben und sind in den Ansprüchen angegeben.

Schließlich wird noch Schutz für die Verwendung dieses Lösemittels zur Oberflächen-Behandlung, insbesondere zum Polieren, und zum Verbinden von Bestandteilen eines Zahnersatzes in einem Verfahren zur Herstellung des Zahnersatzes begehrt.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch zwei Kunststoffrohlinge,
- Fig. 2: eine CNC-Bearbeitungsmaschine mit einem fixierten Kunststoffrohling,
- Fig. 3: einen Zahnfleischkörper mit Ausnehmungen,
- Fig. 4: mehrere Prothesenzähne,
- Fig. 5: einen Zahnersatz aus Zahnfleischkörper und Prothesenzähnen,
- Fig. 6: eine Flasche gefüllt mit Lösemittel,
- Fig. 7: einen Zahnersatz mit Pinsel beim Auftragen von Lösemittel,
- Fig. 8: einen Tauchbehälter mit eingetauchtem Zahnersatz,
- Fig. 9: einen Zahnersatz in einer Bedampfungskammer und
- Fig. 10: einen polierten, glänzenden und glatten Zahnersatz.

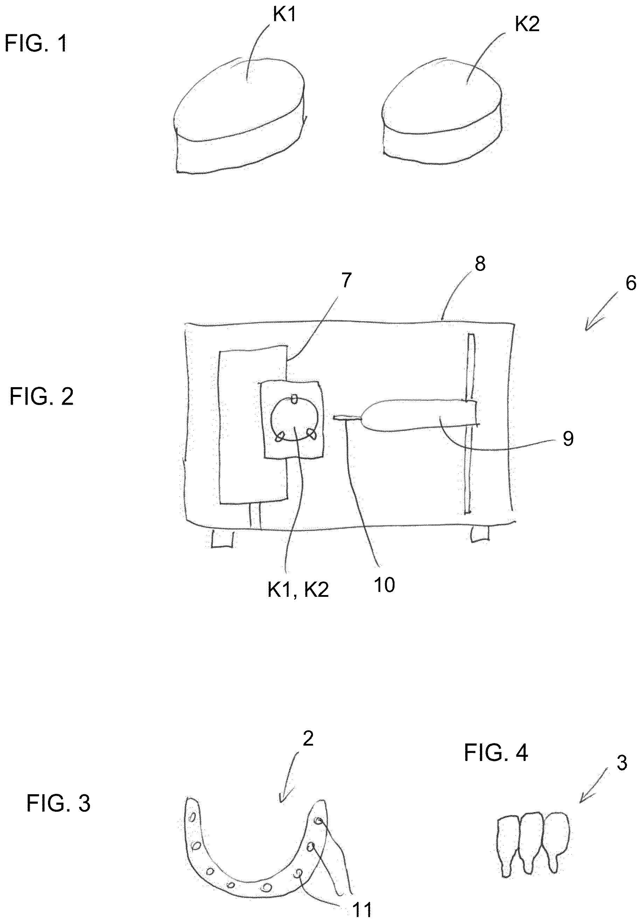

In Fig. 1 sind zwei Kunststoffrohlinge K1 und K2 dargestellt. Diese können an sich jede beliebige Form haben. Bevorzugt sind diese Kunststoffrohlinge K1 und K2 scheibenförmig ausgebildet. Der erste Kunststoffrohling K1 weist eine rötliche, vorzugsweise fleischfarbene, Farbe auf. Aus diesem wird der Zahnfleischkörper 2 herausgearbeitet. Der zweite Kunststoffrohling K2 weist eine weißliche bis beige Farbe auf. Aus diesem werden die Prothesenzähne 3 herausgearbeitet.

In Fig. 2 ist schematisch eine CNC-Bearbeitungsmaschine 6 dargestellt. Diese weist ein Gehäuse 8, eine relativ zum Gehäuse 8 bewegbare Haltevorrichtung 7 für einen Kunststoffrohling K1 bzw. K2 und eine Bearbeitungsvorrichtung 9 mit einem Bearbeitungswerkzeug 10 zum Bearbeiten des Kunststoffrohlings K1 bzw. K2 auf. Für die Herstellung des Zahnersatzes 1 werden die Kunststoffrohlinge K1 und K2 in der Haltevorrichtung 7 fixiert und auf Basis von hinterlegten oder durch einen Zahntechniker festlegbaren Daten durch die Bearbeitungsvorrichtung 9 materialabtragend bearbeitet. Als Beispiel für eine solche Bearbeitungsmaschine kann auf die EP 3 095 412 B1 verwiesen werden.

Fig. 3 zeigt schematisch einen Zahnfleischkörper 2, welcher aus dem ersten Kunststoffrohling K1 herausgearbeitet worden ist. In diesem Zahnfleischkörper 2 sind mehrere Ausnehmungen 11 (oder Vertiefungen) zum Anbringen von Prothesenzähnen 3 ausgebildet.

In Fig. 4 sind mehre Prothesenzähne 3 dargestellt, welche aus dem zweiten Kunststoffrohling K2 herausgearbeitet worden sind. Diese Prothesenzähne 3 sind in diesem Fall einstückig ausgebildet. Es können aber auch mehrere einzelne, jeweils einen Prothesenzahn 3 bildende Stücke aus dem zweiten Kunststoffrohling K2 herausgearbeitet werden.

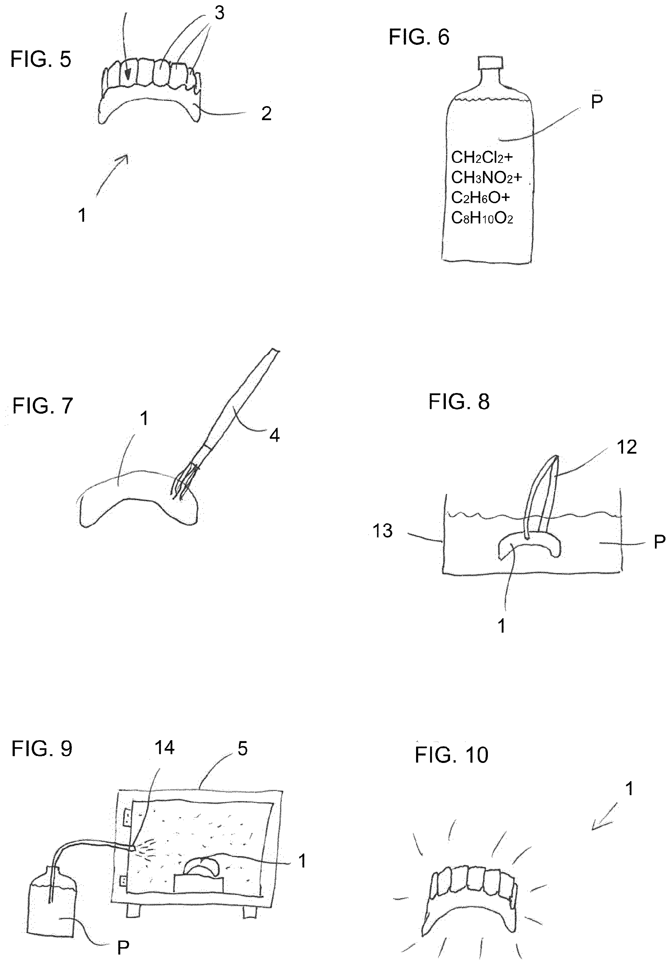

Fig. 5 zeigt einen zusammengesetzten Zahnersatz 1 in Form einer Dentalprothese, wobei die Prothesenzähne 3 mit dem Zahnfleischkörper 2 verbunden, vorzugsweise verklebt, sind. Die Oberfläche F des Zahnersatzes 1 ist aufgrund der eher groben Bearbeitung mit dem Bearbeitungswerkzeug 10 noch relativ rau und matt.

Für die Oberflächen-Behandlung des Zahnersatzes 1 wird ein Lösemittel P verwendet. In Fig. 6 ist schematisch eine Flasche dargestellt, welche mit einem solchen flüssigen Lösemittel P gefüllt ist. Dieses Lösemittel P enthält zu 50 Gewichtsprozent bis 80 Gewichtsprozent zumindest einen Chlorkohlenwasserstoff und zu 15 Gewichtsprozent bis 45 Gewichtsprozent zumindest ein Nitroderivat des Methans enthält. Konkret enthält dieses Lösemittel P zumindest Dichlormethan (CH₂Cl₂) und Nitromethan (CH₃NO₂). Zudem enthält dieses Lösemittel P bevorzugt Ethanol (C₂H₆O) und Phenoxyethanol (C₈H₁₀O₂).

In Fig. 7 ist schematisch die Oberflächen-Behandlung durch Bemalen dargestellt. Konkret wird das Lösemittel P mit einem Pinsel 4 auf die Oberfläche F des Zahnersatzes 1 aufgetragen. Nach dem Einwirken lassen wird und Aushärten des Lösemittels wird der Zahnersatz 1 mit Wasser abgespült.

In Fig. 8 ist schematisch die Oberflächen-Behandlung durch Eintauchen des Zahnersatzes 1 in das flüssige Lösemittel P dargestellt. Dazu nimmt der Zahntechniker den Zahnersatz 1 mit einem geeigneten Werkzeug 12, zum Beispiel in Form einer Zange, und taucht den Zahnersatz 1 in einen mit Lösemittel P gefüllten Tauchbehälter 13. Dieses Tauchen kann ca. 1 bis 30 Sekunden dauern. Dabei wird der Zahnersatz 1 im Lösemittel P geschwenkt. Anschließend erfolgt ein Trocknen des Zahnersatzes 1 mit Druckluft (vorzugsweise mit 4 bis 6 bar). Nach dem Trocknen wird der Zahnersatz für ca. 1 Minute unter Verwendung von Ultraschall gereinigt.

Fig. 9 zeigt schematisch eine verschließbare Bedampfungskammer 5. Zunächst wird der Zahnersatz 1 in die Bedampfungskammer 5 gelegt (oder gegebenenfalls einer bewegbaren Haltevorrichtung gehalten). Dann wird die Bedampfungskammer 5 geschlossen und in der Bedampfungskammer 5 ein Unterdruck erzeugt. Dann wird Lösemittel P in die Bedampfungskammer 5 über eine Düse 14 gesprüht, wodurch in der Bedampfungskammer 5 ein Lösemittelnebel bzw. -dampf entsteht. Dieser Lösemittelnebel oder Lösemitteldampf schlägt sich auf der Oberfläche F des Zahnersatzes 1 nieder bzw. benetzt diese. Nach einer ausreichenden Einwirkzeit wird der Lösemittelnebel abgesaugt, die Bedampfungskammer 5 geöffnet und der polierte Zahnersatz 1 entnommen.

In Fig. 10 ist schließlich noch schematisch ein Zahnersatz 1 mit einem Zahnfleischkörper 2 und am Zahnfleischkörper 2 angeordneten und mit dem Zahnfleischkörper 2 verbundenen Prothesenzähnen 3 gezeigt, wobei auf der Oberfläche F des Zahnersatzes 1 das Lösemittel P aufgebracht ist. Dadurch ist die Oberfläche F glänzend und möglichst glatt.

### Bezugszeichenliste:

- 1: Zahnersatz
- 2: Zahnfleischkörper
- 3: Prothesenzähne
- 4: Pinsel
- 5: Bedampfungskammer
- 6: CNC-Bearbeitungsmaschine
- 7: Haltevorrichtung
- 8: Gehäuse
- 9: Bearbeitungsvorrichtung
- 10: Bearbeitungswerkzeug
- 11: Ausnehmungen
- 12: Werkzeug
- 13: Tauchbehälter
- 14: Düse
- F: Oberfläche der Dentalprothese
- P: Lösemittel
- K1: erster Kunststoffrohling
- K2: zweiter Kunststoffrohling

## Patentansprüche

1. Verfahren zum Herstellen eines Zahnersatzes (1), wobei der Zahnersatz (1) aus einem Zahnfleischkörper (2) und aus am Zahnfleischkörper (2) angeordneten und mit dem Zahnfleischkörper (2) verbundenen Prothesenzähnen (3) hergestellt wird und wobei die Oberfläche (F) des Zahnersatzes (1) einer Oberflächen-Behandlung unterzogen wird, **dadurch gekennzeichnet, dass** die Oberflächen-Behandlung des Zahnersatzes (1) mit einem Lösemittel (P) erfolgt, wobei das Lösemittel (P) zumindest einen Chlorkohlenwasserstoff und zumindest ein Nitroderivat des Methans enthält.

2. Verfahren nach Anspruch 1, **dadurch gekennzeichnet, dass** das Lösemittel (P) zu 50 bis 80 Gewichtsprozent zumindest einen Chlorkohlenwasserstoff und zu 15 bis 45 Gewichtsprozent zumindest ein Nitroderivat des Methans enthält.

3. Verfahren nach Anspruch 1 oder 2, **dadurch gekennzeichnet, dass** die Herstellung des Zahnersatzes (1) die Schritte
- Herstellen des Zahnfleischkörpers (2) durch Bearbeiten, insbesondere Fräsen, eines ersten Kunststoffrohlings (K1),
- Herstellen der Prothesenzähne (3) durch Bearbeiten, insbesondere Fräsen, zumindest eines zweiten Kunststoffrohlings (K2) und
- Verbinden, insbesondere Verkleben, der Prothesenzähne (3) mit dem Zahnfleischkörper (2) zum Zahnersatz (1)
umfasst.

4. Verfahren nach Anspruch 3, **dadurch gekennzeichnet, dass** das Verbinden der Prothesenzähne (3) mit dem Zahnfleischkörper (2) durch das Lösemittel (P) erfolgt, wobei vorzugsweise die Prothesenzähne (3) und der Zahnfleischkörper (2) Kontaktbereiche aufweisen, über welche sich die Prothesenzähne (3) und der Zahnfleischkörper (2) in zusammengesetzten Zustand kontaktieren, wobei das Verbinden erfolgt, indem das Lösemittel (P) vor dem Zusammensetzen auf den Kontaktbereich des Zahnfleischkörpers (2) und/oder der Prothesenzähne (3) aufgetragen wird.

5. Verfahren nach einem der Ansprüche 1 bis 4, **dadurch gekennzeichnet, dass** der zumindest eine Chlorkohlenwasserstoff ausgewählt wird aus der Gruppe Chloroform, 1,2-Dichlorethan, Dichlormethan, Trichlorethylen, Acetylchlorid und Mischungen daraus.

6. Verfahren nach einem der Ansprüche 1 bis 5, **dadurch gekennzeichnet, dass** das zumindest eine Nitroderivat des Methans ausgewählt wird aus der Gruppe Nitromethan, Dinitromethan, Trinitromethan, Tetranitromethan und Mischungen daraus.

7. Verfahren nach einem der Ansprüche 1 bis 6, **dadurch gekennzeichnet, dass** das Lösemittel (P) bis zu 10 Gewichtsprozent, vorzugsweise zwischen 0,1 Gewichtsprozent und 10 Gewichtsprozent, Ethanol oder dessen Derivate - vorzugsweise ausgewählt aus der Gruppe Ethanol, Essigsäure, Acetaldehyd, Ethylacetat, Diethylether, Ameisensäureethylester und Mischungen daraus - enthält.

8. Verfahren nach einem der Ansprüche 1 bis 7, **dadurch gekennzeichnet, dass** das Lösemittel (P) bis zu 7,5 Gewichtsprozent, vorzugsweise zwischen 0,1 Gewichtsprozent und 7,5 Gewichtsprozent, Aromaten oder deren Alkohole oder Ether von alkoholischen Aromaten - vorzugsweise ausgewählt aus der Gruppe Benzol, Benzylalkohol, Phenoxyethanol, Benzcatechin, Resorcin, Hydrochinon und Mischungen daraus - enthält.

9. Verfahren nach einem der Ansprüche 1 bis 8, **dadurch gekennzeichnet, dass** das Lösemittel (P) bis zu 4 Gewichtsprozent, vorzugsweise zwischen 0,1 Gewichtsprozent und 4 Gewichtsprozent, Cycloalkane oder heterocyclische Verbindungen - vorzugsweise ausgewählt aus der Gruppe Cyclohexan, Cyclopentan, Oxan, Oxalan, Oxetan und Mischungen daraus - enthält.

10. Verfahren nach einem der Ansprüche 1 bis 9, **dadurch gekennzeichnet, dass** das Lösemittel (P), vorzugsweise nur, die Bestandteile
- Dichlormethan zu 65 Gewichtsprozent bis 85 Gewichtsprozent, vorzugsweise zu 75 Gewichtsprozent,
- Nitromethan zu 15 Gewichtsprozent bis 25 Gewichtsprozent, vorzugsweise zu 20 Gewichtsprozent,
- Ethanol zu 2 Gewichtsprozent bis 4 Gewichtsprozent, vorzugsweise zu 3 Gewichtsprozent, und
- Phenoxyethanol zu 1 Gewichtsprozent bis 3 Gewichtsprozent, vorzugsweise zu 2 Gewichtsprozent,
enthält.

11. Verfahren nach einem der Ansprüche 1 bis 10, **dadurch gekennzeichnet, dass** die Oberflächen-Behandlung durch Bemalen des Zahnersatzes (1) mit dem Lösemittel (P) erfolgt, wobei vorzugsweise die Oberflächen-Behandlung durch Bemalen die Schritte
- Auftragen des Lösemittels (P) mit einem Pinsel (4) auf den Zahnersatz (1),
- Einwirken lassen des Lösemittels (P), vorzugsweise für etwa 30 Sekunden bis 3 Minuten, und
- Abspülen der Oberfläche (F) des Zahnersatzes (1) mit Wasser
umfasst.

12. Verfahren nach einem der Ansprüche 1 bis 10, **dadurch gekennzeichnet, dass** die Oberflächen-Behandlung durch Eintauchen des Zahnersatzes (1) in das Lösemittel (P) erfolgt, wobei vorzugsweise die Oberflächen-Behandlung durch Tauchen die Schritte
- Eintauchen des Zahnersatzes (1), vorzugsweise für eine Sekunde bis 30 Sekunden, in das Lösemittel (P),
- Trocknen des Zahnersatzes (1), vorzugsweise mittels Druckluft, und
- Reinigen der Oberfläche (F) des Zahnersatzes (1), vorzugsweise für etwa eine Minute und vorzugsweise mit Ultraschall,
umfasst.

13. Verfahren nach einem der Ansprüche 1 bis 10, **dadurch gekennzeichnet, dass** die Oberflächen-Behandlung durch Bedampfen des Zahnersatzes (1) mit dem Lösemittel (P) erfolgt, wobei vorzugsweise die Oberflächen-Behandlung durch Bedampfen die Schritte:
- Einbringen des Zahnersatzes (1) in eine, vorzugsweise luftdichte, Bedampfungskammer (5),
- Schließen der Bedampfungskammer (5),
- gegebenenfalls Absenken des Drucks in der Bedampfungskammer,
- Einlassen des Lösemittels (P) in die Bedampfungskammer (5), was zu einem Verdampfen zumindest eines Teils des Lösemittels (P) führt, wodurch sich der Lösemittel-Dampf auf die Oberfläche (F) des Zahnersatzes (1) niederschlägt,
- Einwirken lassen des Lösemittels (P), vorzugsweise für wenigstens 30 Sekunden,
- Öffnen der Bedampfungskammer (5) und
- Entnehmen des Zahnersatzes (1) aus der Bedampfungskammer (5) umfasst.

14. Zahnersatz (1), insbesondere hergestellt in einem Verfahren nach einem der Ansprüche 1 bis 13, mit einem Zahnfleischkörper (2) und am Zahnfleischkörper (2) angeordneten und mit dem Zahnfleischkörper (2) verbundenen Prothesenzähnen (3), **dadurch gekennzeichnet, dass** auf der Oberfläche (F) des Zahnersatzes (1) ein Lösemittel (P) aufgebracht ist und dieses Lösemittel (P), vorzugsweise zu 50 Gewichtsprozent bis 80 Gewichtsprozent, ein Chlorkohlenwasserstoff und, vorzugsweise zu 15 Gewichtsprozent bis 45 Gewichtsprozent, ein Nitroderivat des Methans enthält.

15. Lösemittel (P) für die Verwendung bei einer Oberflächen-Behandlung eines Zahnersatzes (1) in einem Verfahren nach einem der Ansprüche 1 bis 13, wobei das Lösemittel (P) als Bestandteile
- zumindest einen Chlorkohlenwasserstoff, vorzugswese zu 50 Gewichtsprozent bis 80 Gewichtsprozent, und
- zumindest ein Nitroderivat des Methans, vorzugsweise zu 15 Gewichtsprozent bis 45 Gewichtsprozent,
enthält, wobei vorzugsweise das Lösemittel (P) als Bestandteile
- zumindest ein Ethanol oder dessen Derivate zu 0,1 Gewichtsprozent bis 10 Gewichtsprozent,
- zumindest einen Aromaten oder deren Alkohole oder Ether von alkoholischen Aromaten zu 0,1 Gewichtsprozent bis 7,5 Gewichtsprozent und
- zumindest ein Cycloalkan oder dessen heterocyclischen Verbindungen zu 0,1 Gewichtsprozent bis 4 Gewichtsprozent
enthält.

16. Lösemittel nach Anspruch 15, **dadurch gekennzeichnet, dass** das Lösemittel (P) als Bestandteile
- Dichlormethan zu 65 Gewichtsprozent bis 85 Gewichtsprozent, vorzugsweise zu 75 Gewichtsprozent,
- Nitromethan zu 15 Gewichtsprozent bis 25 Gewichtsprozent, vorzugsweise zu 20 Gewichtsprozent,
- Ethanol zu 2 Gewichtsprozent bis 4 Gewichtsprozent, vorzugsweise zu 3 Gewichtsprozent, und
- Phenoxyethanol zu 1 Gewichtsprozent bis 3 Gewichtsprozent, vorzugsweise zu 2 Gewichtsprozent,
enthält.

17. Verwendung des Lösemittels (P) nach einem der Ansprüche 15 bis 16 zur Oberflächen-Behandlung eines Zahnersatzes (1) in einem Verfahren zur Herstellung des Zahnersatzes (1).

## Claims

1. A method for producing a dental prosthesis (1), wherein the dental prosthesis (1) is produced from a gum part (2) and prosthetic teeth (3) arranged on the gum part (2) and connected to the gum part (2) and wherein the surface (F) of the dental prosthesis (1) is subjected to a surface treatment, **characterized in that** the surface treatment of the dental prosthesis (1) is effected with a solvent (P), wherein the solvent (P) contains at least one chlorinated hydrocarbon and at least one nitro derivative of methane.

2. The method according to claim 1, **characterized in that** the solvent (P) contains at least one chlorinated hydrocarbon at 50 to 80 percent by weight and at least one nitro derivative of methane at 15 to 45 percent by weight.

3. The method according to claim 1 or 2, **characterized in that** the production of the dental prosthesis (1) comprises the steps of
- producing the gum part (2) by machining, in particular milling, a first plastic blank (K1),
- producing the prosthetic teeth (3) by machining, in particular milling, at least one second plastic blank (K2) and
- connecting, in particular gluing, the prosthetic teeth (3) to the gum part (2) to form the dental prosthesis (1).

4. The method according to claim 3, **characterized in that** the connection of the prosthetic teeth (3) to the gum part (2) is effected by the solvent (P), wherein preferably the prosthetic teeth (3) and the gum part (2) have contact areas, via which the prosthetic teeth (3) and the gum part (2) contact each other in the assembled state, wherein the connection is effected by depositing the solvent (P) on the contact area of the gum part (2) and/or of the prosthetic teeth (3) before assembly.

5. The method according to one of the claims 1 to 4, **characterized in that** the at least one chlorinated hydrocarbon is selected from the group chloroform, 1,2-dichloroethane, dichloromethane, trichloroethylene, acetyl chloride and mixtures thereof.

6. The method according to one of the claims 1 to 5, **characterized in that** the at least one nitro derivative of methane is selected from the group nitromethane, dinitromethane, trinitromethane, tetranitromethane and mixtures thereof.

7. The method according to one of the claims 1 to 6, **characterized in that** the solvent (P) contains up to 10 percent by weight, preferably between 0.1 percent by weight and 10 percent by weight, ethanol or derivatives thereof - preferably selected from the group ethanol, acetic acid, acetaldehyde, ethyl acetate, diethyl ether, formic acid ethyl ester and mixtures thereof.

8. The method according to one of the claims 1 to 7, **characterized in that** the solvent (P) contains up to 7.5 percent by weight, preferably between 0.1 percent by weight and 7.5 percent by weight, aromatics or alcohols thereof or ethers of alcoholic aromatics - preferably selected from the group benzene, benzyl alcohol, phenoxyethanol, catechol, resorcinol, hydroquinone and mixtures thereof.

9. The method according to one of the claims 1 to 8, **characterized in that** the solvent (P) contains up to 4 percent by weight, preferably between 0.1 percent by weight and 4 percent by weight, cycloalkanes or heterocyclic compounds - preferably selected from the group cyclohexane, cyclopentane, oxane, oxalan, oxetane and mixtures thereof.

10. The method according to one of the claims 1 to 9, **characterized in that** the solvent (P), preferably only, contains the constituents
- dichloromethane at 65 percent by weight to 85 percent by weight, preferably at 75 percent by weight,
- nitromethane at 15 percent by weight to 25 percent by weight, preferably at 20 percent by weight,
- ethanol at 2 percent by weight to 4 percent by weight, preferably at 3 percent by weight, and
- phenoxyethanol at 1 percent by weight to 3 percent by weight, preferably at 2 percent by weight.

11. The method according to one of the claims 1 to 10, **characterized in that** the surface treatment is effected by painting the dental prosthesis (1) with the solvent (P), wherein preferably the surface treatment by painting comprises the steps of
- depositing the solvent (P) on the dental prosthesis (1) with a brush (4),
- leaving the solvent (P) to act, preferably for approximately 30 seconds to 3 minutes, and
- rinsing the surface (F) of the dental prosthesis (1) with water.

12. The method according to one of the claims 1 to 10, **characterized in that** the surface treatment is effected by dipping the dental prosthesis (1) into the solvent (P), wherein preferably the surface treatment by dipping comprises the steps of
- dipping the dental prosthesis (1) into the solvent (P), preferably for one second to 30 seconds,
- drying the dental prosthesis (1), preferably by means of compressed air, and
- cleaning the surface (F) of the dental prosthesis (1), preferably for approximately one minute and preferably with ultrasound.

13. The method according to one of the claims 1 to 10, **characterized in that** the surface treatment is effected by vapour deposition of the solvent (P) on the dental prosthesis (1), wherein preferably the surface treatment by vapour deposition comprises the steps of:
- introducing the dental prosthesis (1) into a, preferably airtight, vapour-deposition chamber (5),
- closing the vapour-deposition chamber (5),
- optionally lowering the pressure in the vapour-deposition chamber,
- letting the solvent (P) into the vapour-deposition chamber (5), which leads to a vaporization of at least some of the solvent (P), whereby the solvent vapour condenses on the surface (F) of the dental prosthesis (1),
- leaving the solvent (P) to act, preferably for at least 30 seconds,
- opening the vapour-deposition chamber (5) and
- removing the dental prosthesis (1) from the vapour-deposition chamber (5).

14. A dental prosthesis (1), in particular produced using a method according to one of the claims 1 to 13, with a gum part (2) and prosthetic teeth (3) arranged on the gum part (2) and connected to the gum part (2), **characterized in that** a solvent (P) is applied to the surface (F) of the dental prosthesis (1) and this solvent (P) contains a chlorinated hydrocarbon, preferably at 50 percent by weight to 80 percent by weight, and a nitro derivative of methane, preferably at 15 percent by weight to 45 percent by weight.

15. A solvent (P) for use in a surface treatment of a dental prosthesis (1) in a method according to one of the claims 1 to 13, wherein the solvent (P) contains as constituents
- at least one chlorinated hydrocarbon, preferably at 50 percent by weight to 80 percent by weight, and
- at least one nitro derivative of methane, preferably at 15 percent by weight to 45 percent by weight,
wherein preferably the solvent (P) contains as constituents
- at least one ethanol or derivatives thereof at 0.1 percent by weight to 10 percent by weight,
- at least one aromatic or alcohols thereof or ethers of alcoholic aromatics at 0.1 percent by weight to 7.5 percent by weight and
- at least one cycloalkane or heterocyclic compounds thereof at 0.1 percent by weight to 4 percent by weight.

16. The solvent according to claim 15, **characterized in that** the solvent (P) contains as constituents
- dichloromethane at 65 percent by weight to 85 percent by weight, preferably at 75 percent by weight,
- nitromethane at 15 percent by weight to 25 percent by weight, preferably at 20 percent by weight,
- ethanol at 2 percent by weight to 4 percent by weight, preferably at 3 percent by weight, and
- phenoxyethanol at 1 percent by weight to 3 percent by weight, preferably at 2 percent by weight.

17. Use of the solvent (P) according to one of the claims 15 to 16 for the surface treatment of a dental prosthesis (1) in a method for producing the dental prosthesis (1).

## Revendications

1. Procédé pour fabriquer une prothèse dentaire (1), dans lequel la prothèse dentaire (1) est fabriquée à partir d'un corps de gencive (2) et de dents de prothèse (3) disposées sur le corps de gencive (2) et reliées au corps de gencive (2) et dans lequel la surface (F) de la prothèse dentaire (1) est soumise à un traitement de surface, **caractérisé en ce que** le traitement de surface de la prothèse dentaire (1) s'effectue avec un solvant (P), dans lequel le solvant (P) contient au moins un composé organochloré et au moins un dérivé nitré du méthane.

2. Procédé selon la revendication 1, **caractérisé en ce que** le solvant (P) contient au moins un composé organochloré à raison de 50 à 80 pour cent en poids et au moins un dérivé nitré du méthane à raison de 15 à 45 pour cent en poids.

3. Procédé selon la revendication 1 ou 2, **caractérisé en ce que** la fabrication de la prothèse dentaire (1) comprend les étapes
- de fabrication du corps de gencive (2) par usinage, en particulier fraisage, d'une première ébauche plastique (K1),
- de fabrication des dents de prothèse (3) par usinage, en particulier fraisage, d'au moins une deuxième ébauche plastique (K2) et
- de liaison, en particulier de collage, des dents de prothèse (3) au corps de gencive (2) en la prothèse dentaire (1).

4. Procédé selon la revendication 3, **caractérisé en ce que** la liaison des dents de prothèse (3) au corps de gencive (2) s'effectue au moyen du solvant (P), dans lequel de préférence les dents de prothèse (3) et le corps de gencive (2) présentent des zones de contact, par l'intermédiaire desquelles les dents de prothèse (3) et le corps de gencive (2) sont en contact dans l'état assemblé, dans lequel la liaison s'effectue du fait que le solvant (P) est appliqué avant l'assemblage sur la zone de contact du corps de gencive (2) et/ou des dents de prothèse (3).

5. Procédé selon l'une quelconque des revendications 1 à 4, **caractérisé en ce que** l'au moins un composé organochloré est sélectionné dans le groupe du chloroforme, du 1,2-dichloroéthane, du dichlorométhane, du trichloroéthylène, du chlorure d'acétyle et des mélanges de ceux-ci.

6. Procédé selon l'une quelconque des revendications 1 à 5, **caractérisé en ce que** l'au moins un dérivé nitré du méthane est sélectionné dans le groupe du nitrométhane, du dinitrométhane, du trinitrométhane, du tétranitrométhane et des mélanges de ceux-ci.

7. Procédé selon l'une quelconque des revendications 1 à 6, **caractérisé en ce que** le solvant (P) contient jusqu'à 10 pour cent en poids, de préférence entre 0,1 pour cent en poids et 10 pour cent en poids, d'éthanol ou des dérivés de celui-ci - de préférence sélectionné dans le groupe de l'éthanol, de l'acide acétique, de l'acétaldéhyde, de l'acétate d'éthyle, de l'éther diéthylique, de l'ester éthylique d'acide formique et des mélanges de ceux-ci.

8. Procédé selon l'une quelconque des revendications 1 à 7, **caractérisé en ce que** le solvant (P) contient jusqu'à 7,5 pour cent en poids, de préférence entre 0,1 pour cent en poids et 7,5 pour cent en poids, d'aromatiques ou d'alcools de ceux-ci ou d'éthers d'aromatiques alcooliques - de préférence sélectionnés dans le groupe du benzène, de l'alcool benzylique, du phénoxyéthanol, de la benzcatéchine, de la résorcine, de l'hydroquinone et des mélanges de ceux-ci.

9. Procédé selon l'une quelconque des revendications 1 à 8, **caractérisé en ce que** le solvant (P) contient jusqu'à 4 pour cent en poids, de préférence entre 0,1 pour cent en poids et 4 pour cent en poids, de cycloalcanes ou de composés hétérocycliques - de préférence sélectionnés dans le groupe du cyclohexane, du cyclopentane, de l'oxane, de l'oxalane, de l'oxétane et des mélanges de ceux-ci.

10. Procédé selon l'une quelconque des revendications 1 à 9, **caractérisé en ce que** le solvant (P) contient, de préférence uniquement, les constituants
- dichlorométhane à raison de 65 pour cent en poids à 85 pour cent en poids, de préférence à raison de 75 pour cent en poids,
- nitrométhane à raison de 15 pour cent en poids à 25 pour cent en poids, de préférence à raison de 20 pour cent en poids,
- éthanol à raison de 2 pour cent en poids à 4 pour cent en poids, de préférence à raison de 3 pour cent en poids, et
- phénoxyéthanol à raison de 1 pour cent en poids à 3 pour cent en poids, de préférence à raison de 2 pour cent en poids.

11. Procédé selon l'une quelconque des revendications 1 à 10, **caractérisé en ce que** le traitement de surface s'effectue par peinture de la prothèse dentaire (1) avec le solvant (P), dans lequel de préférence le traitement de surface par peinture comprend les étapes consistant à
- appliquer le solvant (P) avec un pinceau (4) sur la prothèse dentaire (1),
- aisser agir le solvant (P), de préférence pendant environ 30 secondes à 3 minutes, et
- rincer la surface (F) de la prothèse dentaire (1) avec de l'eau.

12. Procédé selon l'une quelconque des revendications 1 à 10, **caractérisé en ce que** le traitement de surface s'effectue par trempage de la prothèse dentaire (1) dans le solvant (P), dans lequel de préférence le traitement de surface par immersion comprend les étapes consistant à
- tremper la prothèse dentaire (1), de préférence pendant 1 seconde à 30 secondes, dans le solvant (P),
- sécher la prothèse dentaire (1), de préférence au moyen d'air comprimé, et
- nettoyer la surface (F) de la prothèse dentaire (1), de préférence pendant environ une minute et de préférence avec des ultrasons.

13. Procédé selon l'une quelconque des revendications 1 à 10, **caractérisé en ce que** le traitement de surface s'effectue par vaporisation de la prothèse dentaire (1) avec le solvant (P), dans lequel de préférence le traitement de surface par vaporisation comprend les étapes consistant à :
- introduire la prothèse dentaire (1) dans une chambre de vaporisation (5), de préférence étanche à l'air,
- fermer la chambre de vaporisation (5),
- éventuellement baisser la pression dans la chambre de vaporisation,
- laisser entrer le solvant (P) dans la chambre de vaporisation (5), ce qui entraîne une vaporisation d'au moins une partie du solvant (P), ce qui a pour effet que la vapeur de solvant se dépose sur la surface (F) de la prothèse dentaire (1),
- laisser agir le solvant (P), de préférence pendant au moins 30 secondes,
- ouvrir la chambre de vaporisation (5) et
- prélever la prothèse dentaire (1) de la chambre de vaporisation (5).

14. Prothèse dentaire (1), en particulier fabriquée dans un procédé selon l'une quelconque des revendications 1 à 13, avec un corps de gencive (2) et des dents de prothèse (3) disposées sur le corps de gencive (2) et reliées au corps de gencive (2), **caractérisée en ce qu'**un solvant (P) est appliqué sur la surface (F) de la prothèse dentaire (1) et ce solvant (P) contient, de préférence à raison de 50 pour cent en poids à 80 pour cent en poids, un composé organochloré et, de préférence à raison de 15 pour cent en poids à 45 pour cent en poids, un dérivé nitré du méthane.

15. Solvant (P) pour son utilisation lors d'un traitement de surface d'une prothèse dentaire (1) dans un procédé selon l'une quelconque des revendications 1 à 13, où le solvant (P) contient comme constituants
- au moins un composé organochloré, de préférence à raison de 50 pour cent en poids à 80 pour cent en poids, et
- au moins un dérivé nitré du méthane, de préférence à raison de 15 pour cent en poids à 45 pour cent en poids,
où de préférence le solvant (P) contient comme constituants
- au moins un éthanol ou des dérivés de celui-ci à raison de 0,1 pour cent en poids à 10 pour cent en poids,
- au moins un aromatique ou des alcools de celui-ci ou éthers d'aromatiques alcooliques à raison de 0,1 pour cent en poids à 7,5 pour cent en poids et
- au moins un cycloalcane ou des composés hétérocycliques de celui-ci à raison de 0,1 pour cent en poids à 4 pour cent en poids.

16. Solvant selon la revendication 15, le solvant (P) étant **caractérisé en ce qu'**il contient comme constituants
- du dichlorométhane à raison de 65 pour cent en poids jusqu'à 85 pour cent en poids, de préférence à raison de 75 pour cent en poids,
- du nitrométhane à raison de 15 pour cent en poids jusqu'à 25 pour cent en poids, de préférence à raison de 20 pour cent en poids,
- de l'éthanol à raison de 2 pour cent en poids à 4 pour cent en poids, de préférence à raison de 3 pour cent en poids, et
- du phénoxyéthanol à raison de 1 pour cent en poids à 3 pour cent en poids, de préférence à raison de 2 pour cent en poids.

17. Utilisation du solvant (P) selon l'une quelconque des revendications 15 à 16 pour le traitement de surface d'une prothèse dentaire (1) dans un procédé pour la fabrication de la prothèse dentaire (1).
